# EUROPEAN PATENT APPLICATION

(11) **EP 4 691 624 A1**
(43) Date of publication of application: **11.02.2026**
(21) Application number: 24780779.5
(22) Date of filing: 29.03.2024
(51) Int. Cl.: B01J 20/10, B01J 20/06, B01J 20/08, C01B 33/18, C02F 1/28

(54) **POROUS BODY, ADSORPTIVE MATERIAL CONTAINING POROUS BODY, AND METHOD FOR REMOVING METAL AND/OR METAL ION USING ADSORPTIVE MATERIAL**

(30) Priority: 30.03.2023 JP 2023055910
(71) Applicant: Mitsui Kinzoku Company, Limited, Tokyo (JP)
(72) Inventor: SASAKI Hayato, Ageo-shi, Saitama 362-0021 (JP); SUGAHARA Kosei, Ageo-shi, Saitama 362-0021 (JP); OSAKO Takao, Ageo-shi, Saitama 362-0021 (JP)
(74) Representative: Novagraaf Technologies
(86) International application number: PCT/JP2024/012983
(87) International publication number: WO 2024/204684

(57) **Abstract**

An object of the present invention is to provide a porous body having excellent adsorption performance, an adsorbent including the porous body, and a method of removing a metal and/or a metal ion from a liquid to be treated, with the adsorbent, and in order to achieve the object, the present invention provides a porous body having a co-continuous structure formed by: a ceramic skeleton (1) including mesopores (3); and macropores (2), wherein a surface of the ceramic skeleton (1) is modified with a nitrogen atom-containing group and a phosphorus atom-containing group, and wherein a total amount of the nitrogen atom-containing group and the phosphorus atom-containing group contained in the porous body is 0.5 mmol/g or more and 6.0 mmol/g or less.

## Description

### Field of Invention

The present invention relates to a porous body, an adsorbent including the porous body, and a method of removing a metal and/or a metal ion with the adsorbent.

### Background Art

Due to environmental regulations and economic considerations, global interest in resource reuse is increasing, and an adsorbent for use in recovery of a metal and/or a metal ion is attracting attention. For example, a particulate porous silica subjected to surface treatment is known as such an adsorbent. Patent Document 1 describes a particulate porous silica having a co-continuous structure formed by: a ceramic skeleton including mesopores; and macropores. Patent Document 1 also describes that a porous silica, the surface of which is modified with a functional group such as an amine-based functional group or a phosphate group, is useful for recovery of a metal and/or a metal ion.

### Citation List

### Patent Document

Patent Document 1: International Publication No. WO 2017/002871

### Summary of Invention

### Technical Problem

An object of the present invention is to provide a porous body having excellent adsorption performance, an adsorbent including the porous body, and a method of removing a metal and/or a metal ion from a liquid to be treated, with the adsorbent.

### Solution to Problem

The present inventors have found that an adsorbent obtained by modifying a surface of a porous body having a co-continuous structure formed by: a ceramic skeleton including mesopores; and macropores, with a predetermined total amount of a nitrogen atom-containing group and a phosphorus atom-containing group, exhibits excellent adsorption performance compared to conventional adsorbents (e.g., mesoporous silica and ion exchange resins), due to the synergistic effect of the nitrogen atom-containing group and the phosphorus atom-containing group.

In a case where a solution containing a metal and/or a metal ion is brought into contact with an adsorbent, the term "adsorption performance" in the present invention refers to both the adsorption rate calculated based on the amount of the metal and/or the metal ion adsorbed by the adsorbent (the percentage of the amount of the metal and/or the metal ion adsorbed by the adsorbent relative to the amount of the metal and/or the metal ion originally contained in the solution), and the adsorption speed calculated by dividing the amount of the metal and/or the metal ion adsorbed by the adsorbent by a predetermined period of time. In the present invention, priority is given to the adsorption speed over the adsorption rate, considering that the recovery speed of a substance to be adsorbed is important in practical use of the adsorbent.

The present inventors have completed the present invention based on these findings. In other words, the present invention encompasses the following porous body, adsorbent, and method.
[1] A porous body having a co-continuous structure formed by: a ceramic skeleton including mesopores; and macropores,
   wherein a surface of the ceramic skeleton is modified with a nitrogen atom-containing group and a phosphorus atom-containing group, and
   wherein a total amount of the nitrogen atom-containing group and the phosphorus atom-containing group contained in the porous body is 0.5 mmol/g or more and 6.0 mmol/g or less.
[2] The porous body according to [1], wherein a first compound containing the nitrogen atom-containing group and the phosphorus atom-containing group is fixed to the surface of the ceramic skeleton, so that the surface of the ceramic skeleton is modified with the nitrogen atom-containing group and the phosphorus atom-containing group.
[3] The porous body according to [1], wherein a second compound containing the nitrogen atom-containing group and a third compound containing the phosphorus atom-containing group are fixed to the surface of the ceramic skeleton, so that the surface of the ceramic skeleton is modified with the nitrogen atom-containing group and the phosphorus atom-containing group.
[4] The porous body according to any one of [1] to [3], wherein the nitrogen atom-containing group is selected from a primary amino group, a secondary amino group, a tertiary amino group, a quaternary ammonium group, an imino group, and a nitrilo group.
[5] The porous body according to any one of [1] to [4], wherein the phosphorus atom-containing group is selected from a phosphinate group, a phosphonate group, a phosphate group, a phosphinous acid group, a phosphonous acid group, a phosphite group, a phosphine group, and a phosphine oxide group.
[6] The porous body according to any one of [1] to [5], wherein a mole ratio of an amount of the phosphorus atom-containing group contained in the porous body to an amount of the nitrogen atom-containing group contained in the porous body is 0.5 or more and 2.5 or less.
[7] The porous body according to any one of [1] to [6], wherein the ceramic skeleton contains an element selected from silicon, aluminum, tin, cerium, titanium, and zirconium.
[8] An adsorbent for metal and/or metal ion recovery including the porous body according to any one of [1] to [7].
[9] The adsorbent according to [8], wherein the metal is selected from: transition metals including rare earth metals; and typical elements of Group 12 to Group 15, and the metal ion is selected from: transition metal ions including rare earth metal ions; and typical element ions of Group 12 to Group 15.
[10] A method of removing a metal and/or a metal ion from a solution containing the metal and/or the metal ion, the method including a step of contacting the solution with the adsorbent according to [8].
[11] The method according to [10], wherein the metal is selected from: transition metals including rare earth metals; and typical elements of Group 12 to Group 15, and the metal ion is selected from: transition metal ions including rare earth metal ions; and typical element ions of Group 12 to Group 15.

### Advantageous Effects of Invention

The present invention provides a porous body having excellent adsorption performance, an adsorbent including the porous body, and a method of removing a metal and/or a metal ion from a liquid to be treated, with the adsorbent. The porous body of the present invention is useful as an adsorbent for metal and/or metal ion recovery, since the adsorption rate is equal to or higher than that of a conventional adsorbent, and the adsorption speed is faster than that of a conventional adsorbent.

### Brief Description of Drawings

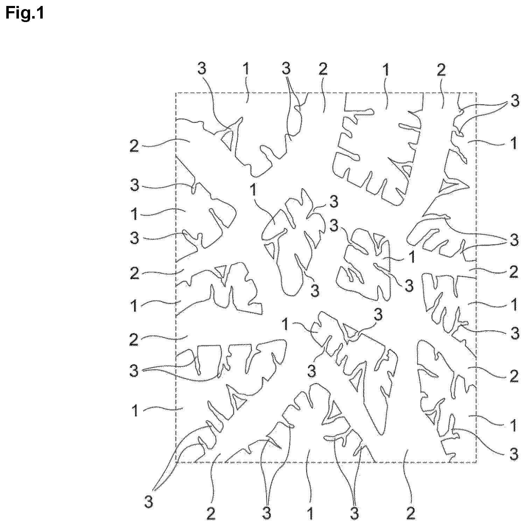

Figure 1 is an enlarged view of a part of the surface of the porous body according to one embodiment of the present invention.

### Detailed Description of Invention

### << Porous body >>

Hereinafter, the porous body of the present invention will be described.

### < Form and shape of porous body >

The form of the porous body is not particularly limited. Examples of the form of the porous body include a particle, an aggregate, and a shaped body. The shape of the porous body is not particularly limited. Examples of the shape of the porous body include columnar, spherical (e.g., true spherical and ellipsoidal spherical), needle-like, scaly (flake-like), polyhedral, flattened, ground, and aggregated shapes. Examples of the columnar shape include cylindrical, elliptic cylindrical, and polygonal columnar shapes (e.g., quadrangular columnar, hexagonal columnar, and octagonal columnar shapes). The columnar shape may be a shape where, for example, such a cylindrical, elliptic cylindrical, or polygonal columnar shape is partially cut off.

In a case where the porous body is in the form of a particle, the particle size is, for example, 0.5 µm or more and 5000 µm or less. The "particle size" refers to an equivalent circle diameter, namely, the diameter of a circle assumed to have the same area as the area of the particle in an observed image (e.g., SEM image) of the particle. The particle size can be adjusted by, for example, classification.

In a case where the porous body is in the form of a columnar body, the length is, for example, 1.0 mm or more and 500 mm or less, and the average diameter is, for example, 1.5 mm or more and 20 mm or less. The "length" refers to the dimension in the direction in which the columnar body extends. The "average diameter" refers to the diameter of the end face in the extension direction of the columnar body. In a case where the end face has a shape other than a circular shape, the "average diameter" refers to the diameter of a circle circumscribed around the end face.

### < Structure of porous body before modification >

Hereinafter, a structure of a porous body before modification with a nitrogen atom-containing group and a phosphorus atom-containing group will be described with reference to Figure 1. Figure 1 is an enlarged view of a part of the surface of the porous body according to one embodiment of the present invention.

As illustrated in Figure 1, the porous body has a co-continuous structure formed by: a ceramic skeleton 1 including mesopores 3; and macropores 2.

In the porous body, the ceramic skeleton 1 and the macropores 2 each have a continuous three-dimensional network structure and are intertangled with each other, thereby forming the co-continuous structure of the ceramic skeleton 1 and the macropores 2. The fact that the porous body has the co-continuous structure of the ceramic skeleton 1 and the macropores 2 can be confirmed by observing a surface or cross section of the porous body with a scanning electron microscope (SEM).

The most frequent pore diameter of the macropores 2 is preferably 0.20 µm or more, more preferably 0.40 µm or more, and still more preferably 0.60 µm or more, from the viewpoint of enhancement in adsorption performance. The most frequent pore diameter of the macropores 2 is preferably 4.0 µm or less, more preferably 3.5 µm or less, and still more preferably 3.0 µm or less, from the same viewpoint. Each of these upper limit values may be combined with any of the lower limit values described above.

The "most frequent pore diameter of the macropores 2" refers to a most frequent pore diameter of macropores, measured in a pore diameter range of 50 nm to 500 µm by a mercury intrusion method, as described in the Examples below.

The most frequent pore diameter of the mesopores 3 is preferably 2.0 nm or more, more preferably 5.0 nm or more, and still more preferably 10.0 nm or more, from the viewpoint of enhancement in adsorption performance. The most frequent pore diameter of the mesopores 3 is preferably 50.0 nm or less, more preferably 40.0 nm or less, and still more preferably 35.0 nm or less, from the same viewpoint. Each of these upper limit values may be combined with any of the lower limit values described above.

The "most frequent pore diameter of the mesopores 3" refers to a most frequent pore diameter of mesopores, measured from a nitrogen adsorption-desorption isotherm by a BJH method, as described in the Examples below.

The ratio of the most frequent pore diameter of the macropores 2 to the most frequent pore diameter of the mesopores 3 is preferably 15 or more, more preferably 20 or more, still more preferably 30 or more, and even more preferably 40 or more, from the viewpoint of enhancement in adsorption performance. The ratio is preferably 200 or less, more preferably 150 or less, still more preferably 130 or less, and even more preferably 120 or less, from the same viewpoint. Each of these upper limit values may be combined with any of the lower limit values described above.

The specific surface area of the porous body, measured from a nitrogen adsorption-desorption isotherm by a BET method, is preferably 100 m²/g or more, more preferably 120 m²/g or more, and still more preferably 130 m²/g or more, from the viewpoint of enhancement in adsorption performance. The upper limit of the specific surface area of the porous body is not particularly limited. The method of measuring the specific surface area from a nitrogen adsorption-desorption isotherm by a BET method is as described in the Examples below.

The total pore volume of the porous body, measured by a mercury intrusion method, is preferably 1.5 mL/g or more and 4.0 mL/g or less, more preferably 1.8 mL/g or more and 3.5 mL/g or less, and still more preferably 2.5 mL/g or more and 3.5 mL/g or less, from the viewpoint of enhancement in adsorption performance. The method of measuring the total pore volume by a mercury intrusion method is as described in the Examples below.

The porosity of the porous body, measured by a mercury intrusion method, is preferably 70% or more and 90% or less, more preferably 70% or more and 85% or less, and still more preferably 75% or more and 85% or less, from the viewpoint of enhancement in adsorption performance. The method of measuring the porosity by a mercury intrusion method is as described in the Examples below.

### < Material of porous body >

The ceramic constituting the ceramic skeleton 1 is, for example, an oxide ceramic containing a semimetal element or a metal element. The ceramic skeleton 1 may contain two or more elements selected from semimetal elements and metal elements.

Examples of the semimetal element include silicon. Examples of a silicon-containing oxide ceramic include silica (SiO₂).

Examples of the metal element include aluminum, tin, zinc, and transition metal elements such as cerium, titanium, zirconium, vanadium, chromium, iron, cobalt, nickel, palladium, platinum, copper, silver, and gold. Among these, aluminum, tin, cerium, titanium, or zirconium is preferable from the viewpoint of ease of production of the porous body. Examples of the oxide ceramic containing aluminum, tin, cerium, titanium, or zirconium include alumina (Al₂O₃), tin oxide (SnO₂), ceria (CeO₂), titania (TiO₂), and zirconia (ZrO₂).

The oxide ceramic may further contain, in addition to silicon, aluminum, tin, zinc, or a transition metal element, any element selected from alkali metal elements such as lithium and sodium, alkaline earth metal elements such as magnesium and calcium, and rare earth elements such as lanthanum, scandium, yttrium, and gadolinium.

### < Method of producing porous body >

The porous body can be produced, for example, by a method including the following steps of:
(a) producing a polymetalloxane gel by a sol-gel method;
(b) forming pores in a skeleton of the polymetalloxane gel produced in step (a); and
(c) firing the polymetalloxane gel subjected to step (b), optionally after washing and/or drying the polymetalloxane gel, to thereby produce a ceramic monolith. Hereinafter, each step will be described.

### Step (a)

In step (a), a polymetalloxane gel is produced by a sol-gel method.

Polymetalloxane is an inorganic polymer having a metalloxane bond as a main chain backbone. The metalloxane bond is a bond of a semimetal element or a metal element with an oxygen atom, namely, a M-O bond (wherein M represents a semimetal element or a metal element).

Examples of the semimetal element represented by M include silicon. Examples of the metal element represented by M include aluminum, tin, cerium, titanium, zirconium, vanadium, chromium, iron, cobalt, nickel, palladium, platinum, copper, silver, gold, and zinc. Aluminum, tin, cerium, titanium, or zirconium is preferable from the viewpoint of ease of production of the porous body.

The sol-gel method can be performed according to a conventional method. One example of the sol-gel method is as follows.

The sol-gel method includes a sol producing step and a gel producing step.

In the sol producing step, a reaction solution containing a ceramic precursor, a catalyst, and a macropore forming agent is stirred to thereby produce a sol.

The ceramic precursor is not particularly limited as long as it can form a polymetalloxane gel.

The ceramic precursor is, for example, a semimetal compound (e.g., a silicon compound) having a hydroxy group and/or a hydrolyzable functional group, or a metal compound (e.g., an aluminum compound, a tin compound, a cerium compound, a titanium compound, or a zirconium compound) having a hydroxy group and/or a hydrolyzable functional group. The total number of the hydroxy group and the hydrolyzable functional group in the ceramic precursor may be 1 or 2, and is preferably 3 or more, and more preferably 4, from the viewpoint of producing a polymetalloxane gel having a highly crosslinked structure by a metalloxane bond (M-O bond). When the ceramic precursor has two or more hydrolyzable functional groups, the types of the two or more hydrolyzable functional groups may be the same or different.

The "hydrolyzable functional group" refers to a functional group that is converted to a hydroxy group through hydrolysis. Examples of the hydrolyzable functional group include an alkoxy group, an acetoxy group, a halide group, and a hydrido group, and an alkoxy group is preferable. The alkoxy group is preferably an alkoxy group having 1 to 10 carbon atoms, more preferably an alkoxy group having 1 to 5 carbon atoms, and still more preferably a methoxy group, an ethoxy group, or a propoxy group. The alkoxy group may be linear or branched.

The ceramic precursor may have a functional group other than the hydroxy group and the hydrolyzable functional group. Examples of the functional group other than the hydroxy group and the hydrolyzable functional group include an alkyl group, an alkenyl group, a phenyl group, a phenoxy group, a carboxyl group, an epoxy group, an aldehyde group, a thiol group, an amino group, an acryloyl group, and a methacryloyl group. The alkyl group is preferably an alkyl group having 1 to 10 carbon atoms, more preferably an alkyl group having 1 to 5 carbon atoms, and still more preferably a methyl group, an ethyl group, or a propyl group. The alkyl group may be linear or branched. The alkenyl group is preferably an alkenyl group having 2 to 10 carbon atoms, more preferably an alkenyl group having 2 to 5 carbon atoms, and still more preferably a vinyl group. The alkenyl group may be linear or branched.

The silicon compound having the hydroxy group and/or the hydrolyzable functional group is preferably an alkoxysilane. Examples of the alkoxysilane include tetraalkoxysilane, trialkoxysilane, dialkoxysilane, and monoalkoxysilane. Among these, tetraalkoxysilane is preferable from the viewpoint of facilitating the progress of hydrolysis reaction and polycondensation reaction. Examples of the tetraalkoxysilane include tetramethoxysilane and tetraethoxysilane.

The aluminum compound having the hydroxy group and/or the hydrolyzable functional group is preferably, for example, aluminum hydroxide or aluminum alkoxide.

The tin compound having the hydroxy group and/or the hydrolyzable functional group is preferably, for example, tin hydroxide or tin alkoxide.

The cerium compound having the hydroxy group and/or the hydrolyzable functional group is preferably, for example, cerium hydroxide or cerium alkoxide.

The titanium compound having the hydroxy group and/or the hydrolyzable functional group is preferably, for example, titanium alkoxide. Examples of the titanium alkoxide include titanium monoalkoxide, titanium dialkoxide, titanium trialkoxide, and titanium tetraalkoxide. Among these, titanium tetraalkoxide is preferable from the viewpoint of facilitating the progress of hydrolysis reaction and polycondensation reaction. Examples of the titanium tetraalkoxide include titanium tetraisopropoxide.

The zirconium compound having the hydroxy group and/or the hydrolyzable functional group is preferably zirconium alkoxide. Examples of the zirconium alkoxide include zirconium monoalkoxide, zirconium dialkoxide, zirconium trialkoxide, and zirconium tetraalkoxide. Among these, zirconium tetraalkoxide is preferable from the viewpoint of facilitating the progress of hydrolysis reaction and polycondensation reaction. Examples of the zirconium tetraalkoxide include zirconium tetraisopropoxide.

The ceramic precursor may be a metal salt (e.g., an aluminum salt, a tin salt, or a cerium salt) that is converted to a hydroxide through hydrolysis. Examples of the aluminum salt include aluminum nitrate, aluminum sulfate, and aluminum chloride. Examples of the tin salt include tin nitrate, tin sulfate, and tin chloride. Examples of the cerium salt include cerium nitrate, cerium sulfate, and cerium chloride. Among these, aluminum chloride, tin chloride, or cerium chloride is preferable from the viewpoint of facilitating the progress of hydrolysis reaction and polycondensation reaction.

The catalyst serves as a catalyst for hydrolysis reaction. Examples of the catalyst include an acid and a base. Examples of the acid include inorganic acids such as hydrochloric acid, sulfuric acid, and nitric acid; and organic acids such as formic acid, acetic acid, oxalic acid, and citric acid. Examples of the base include sodium hydroxide, potassium hydroxide, ammonia water, sodium carbonate, sodium hydrogen carbonate, amines such as trimethylammonium, ammonium hydroxides such as tert-butylammonium hydroxide, and alkali metal alkoxides such as sodium methoxide.

The macropore forming agent contributes to the formation of macropores in a ceramic monolith. Examples of the macropore forming agent include a water-soluble polymer and a surfactant. Among these, the water-soluble polymer is preferable. The water-soluble polymer induces the sol-gel transition accompanied by a phase separation process (typically spinodal decomposition), and contributes to the formation of a co-continuous structure of a skeleton phase and a solvent phase in a gel, and thus to the formation of macropores in a ceramic monolith.

Examples of the water-soluble polymer include polyalkylene glycols such as polyethylene glycol and polypropylene glycol, polyacrylic acid, a polyethylene glycol-polypropylene glycol block copolymer, polyvinylpyrrolidone, polystyrenesulfonic acid sodium salt, and polyallylamine hydrochloride.

The weight average molecular weight of the water-soluble polymer is preferably 8000 or more and 15000 or less from the viewpoint of efficiently performing a phase separation process (typically spinodal decomposition). The weight average molecular weight is measured by GPC (gel permeation chromatography).

Examples of the surfactant include cationic surfactants such as cetyltrimethylammonium chloride, anionic surfactants such as sodium dodecyl sulfate, and non-ionic surfactants such as polyoxyethylene alkyl ether.

When the ceramic precursor is a semimetal compound, the reaction solution may include a mesopore forming agent. The mesopore forming agent contributes to the formation of mesopores in a ceramic monolith. Examples of the mesopore forming agent include a nitrogen compound. Examples of the nitrogen compound usable as the mesopore forming agent include amide compounds such as urea, formamide, N-methylformamide, N,N-dimethylformamide, acetamide, N-methylacetamide, and N,N-dimethylacetamide; and heterocyclic compounds such as hexamethylenetetramine. Among these, urea is preferable from the viewpoint of efficient mesopore formation.

The reaction solution may contain one solvent or may contain two or more solvents. Examples of the solvent include water, an organic solvent, and a mixed solvent of water and an organic solvent. Examples of the organic solvent include alcohols such as methanol, ethanol, propanol, and butanol; and ketones such as acetone and methyl ethyl ketone. When the solvent is a mixed solvent of water and an organic solvent, the content of the organic solvent is preferably 65% by mass or less, based on the mass of the mixed solvent.

The reaction solution is preferably prepared by adding the ceramic precursor to a mixed liquid containing the catalyst, the macropore forming agent, and optionally the mesopore forming agent, from the viewpoint of appropriately controlling a reaction start point. The reaction is started by adding the ceramic precursor to the mixed liquid containing the catalyst, the macropore forming agent, and optionally the mesopore forming agent.

When the reaction solution is stirred, the reaction solution may be cooled. The cooling of the reaction solution is performed so that the temperature of the reaction solution becomes, for example, a temperature that facilitates the progression of the sol-gel transition accompanied by a phase separation process (typically spinodal decomposition), preferably 60°C or less. The lower limit is around a temperature at which the reaction solution is not frozen, and is, for example, about 1°C.

For example, when tetramethoxysilane, which corresponds to the semimetal compound having the hydrolyzable functional group, is used as the ceramic precursor, the above cooling is preferably performed.

The reaction solution forms a sol according to the progress of hydrolysis reaction and polycondensation reaction progress.

In the hydrolysis reaction, the hydrolyzable functional group in the ceramic precursor is hydrolyzed to thereby form a hydroxy group. In the polycondensation reaction, a metalloxane oligomer is formed by a dehydration condensation reaction between hydroxy groups and a dealcoholization condensation reaction between a hydroxy group and a hydrolyzable functional group that has not been hydrolyzed. For example, when the ceramic precursor is the silicon compound having the hydrolyzable functional group, a siloxane oligomer is formed by a dehydration condensation reaction shown in the following formula (1) and a dealcoholization condensation reaction shown in the following formula (2). In the following formula (2), -OR represents a hydrolyzable functional group that has not been hydrolyzed.

=Si-OH + HO-Si≡ -> =Si-O-Si= + H₂O (1)

=Si-OR + HO-Si≡ -> =Si-O-Si= + ROH (2)

When the hydrolysis reaction and the polycondensation reaction further progress, nanometer-sized primary particles of the metalloxane oligomer are formed, and the aggregation of the primary particles leads to the formation of secondary particles. Thus, the reaction solution forms a sol.

In the gel producing step, optionally after a mold for shaping is added to the sol produced in the sol producing step, the sol is heated to a gelation temperature to thereby produce a polymetalloxane gel. In the gel producing step, the hydrolysis reaction and the polycondensation reaction further progress to thereby form a metalloxane polymer, and the sol-gel transition accompanied by a phase separation process (typically spinodal decomposition) is induced to thereby produce a polymetalloxane gel (wet gel). The produced polymetalloxane gel has a co-continuous structure of a skeleton phase and a solvent phase. The skeleton phase is rich in the metalloxane polymer generated by the hydrolysis reaction and the polycondensation reaction, and the solvent phase is rich in the solvent. The skeleton phase and the solvent phase each have a continuous three-dimensional network structure and are entangled with each other, thereby forming the co-continuous structure of the skeleton phase and the solvent phase.

The mold for shaping is a mold for shaping a gel into a desired shape. Examples of the material of the mold include synthetic resins such as polystyrene, polyethylene, polypropylene, polyethylene terephthalate (PET), polycarbonate (PC), silicone, and polytetrafluoroethylene (PTFE), and metals such as aluminum and stainless steel.

The gelation temperature is preferably 20°C or more and 80°C or less, more preferably 25°C or more and 40°C or less, from the viewpoint of appropriately forming the co-continuous structure of the skeleton phase and the solvent phase in the gel. The heating time at the gelation temperature is preferably 4 hours or more and 24 hours or less.

### Step (b)

In step (b), pores are formed in a skeleton of the polymetalloxane gel produced in step (a).

The formation of pores in the skeleton of the polymetalloxane gel can be performed according to a conventional method. When pores are formed in the skeleton of the polymetalloxane gel, the polymetalloxane gel produced in step (a) and a mesopore forming agent may be reacted, if necessary.

The description of the mesopore forming agent is the same as described above. The mesopore forming agent may be contained in the polymetalloxane gel produced in step (a), may be contained in the reaction solution containing the polymetalloxane gel and the mesopore forming agent, or may be contained in both. In step (b), pores (which become mesopores in a ceramic monolith) are formed in the skeleton of the gel. The reaction solution may contain one or two or more solvents. The description of the solvent is the same as described above.

When the polymetalloxane gel and the mesopore forming agent are reacted, both may be reacted under heating and refluxing.

The heating temperature under heating and refluxing is preferably 50°C or more and 120°C or less. The heating time under heating and refluxing is preferably 1 hour or more and 36 hours or less, and more preferably 4 hours or more and 24 hours or less.

When the semimetal compound having the hydrolyzable functional group is used as the ceramic precursor, it is preferable to react the polymetalloxane gel and the mesopore forming agent under heating and refluxing.

### Step (c)

In step (c), the polymetalloxane gel subjected to step (b) is fired, optionally after washing and/or drying the polymetalloxane gel, to thereby produce a ceramic monolith.

Examples of a washing liquid used for the washing include water, an organic solvent, a mixed solvent of water and an organic solvent, and an aqueous solution containing an acid or a base. Examples of the organic solvent include alcohols such as methyl alcohol, ethyl alcohol, n-propanol, 2-propanol (IPA), and butanol. Examples of the acid include hydrochloric acid, sulfuric acid, nitric acid, hydrofluoric acid, acetic acid, formic acid, carbonic acid, citric acid, and phosphoric acid. Examples of the base include sodium hydroxide, potassium hydroxide, ammonia, water-soluble amines, sodium carbonate, and sodium hydrogen carbonate.

Examples of a method for the drying include natural drying, drying by heating, drying using a solvent having low surface tension, drying by freezing and sublimation, and supercritical drying.

In the firing, the firing temperature is preferably 500°C or more and 1000°C or less, more preferably 600°C or more and 800°C or less, and the firing time is preferably 1 hour or more and 8 hours or less, more preferably 3 hours or more and 5 hours or less. The firing is usually performed under an air atmosphere.

The ceramic monolith has a co-continuous structure formed by: a ceramic skeleton including mesopores; and macropores. The ceramic skeleton of the ceramic monolith is formed from the skeleton phase of the polymetalloxane gel, and the macropores of the ceramic monolith are formed from the solvent phase of the polymetalloxane gel.

In one embodiment, the ceramic monolith is a silica monolith. The silica monolith has a co-continuous structure formed by: a silica skeleton including mesopores; and macropores.

In another embodiment, the ceramic monolith can be a monolith of alumina, tin oxide, ceria, titania, or zirconia. Also in such a case, the monolith has a co-continuous structure formed by: a skeleton of alumina, tin oxide, ceria, titania, or zirconia including mesopores; and macropores.

The ceramic monolith produced may be shaped and used as an adsorbent (e.g., an adsorbent having the shape of a columnar body). Alternatively, a shaped ceramic monolith produced using a mold or the like may be used as is or, if necessary, shaped and used as an adsorbent (e.g., an adsorbent having the shape of a columnar body). For example, the shaped ceramic monolith can be produced using a mold for shaping the gel into a desired shape in the gel producing step. The average diameter of the shaped ceramic monolith is smaller than the average diameter of the gel shaped using the mold.

The ceramic monolith produced may be pulverized and used as an adsorbent. The pulverization can be performed according to a conventional method. The pulverization can be performed using, for example, a mortar, a hammer mill, a ball mill, a bead mill, a jet mill, or a roller mill. The particle size of the adsorbent after pulverization is preferably 0.5 µm or more and 5.0 mm or less, more preferably 12.0 µm or more and 3.0 mm or less, and still more preferably 5.0 µm or more and 1.0 mm or less. The "particle size" refers to an equivalent circle diameter, namely, the diameter of a circle assumed to have the same area as the area of the adsorbent after the pulverization in an observed image (e.g., SEM image) of the adsorbent after pulverization.

### < Surface modification >

In the porous body, the surface of the ceramic skeleton 1 is preferably modified with a nitrogen atom-containing group and a phosphorus atom-containing group. The surface of the ceramic skeleton 1 may be modified with two or more nitrogen atom-containing groups. The surface of the ceramic skeleton 1 may be modified with two or more phosphorus atom-containing groups. Each of the nitrogen atom-containing group and the phosphorus atom-containing group may be directly bound to the surface of the ceramic skeleton 1, or may be bound to the surface of the ceramic skeleton 1 via a linker.

The nitrogen atom-containing group and the phosphorus atom-containing group may be present in a single functional group. In other words, the surface of the ceramic skeleton 1 may be modified with a functional group containing the nitrogen atom-containing group and the phosphorus atom-containing group (hereinafter which may be referred to as "nitrogen/phosphorus-containing group"). The nitrogen/phosphorus-containing group may contain two or more nitrogen atom-containing groups. The nitrogen/phosphorus-containing group may contain two or more phosphorus atom-containing groups. The surface of the ceramic skeleton 1 may be modified with two or more nitrogen/phosphorus-containing groups. The nitrogen/phosphorus-containing group may be directly bound to the surface of the ceramic skeleton 1, or may be bound to the surface of the ceramic skeleton 1 via a linker.

The surface of the ceramic skeleton 1 encompasses both an inner surface and an outer surface of the ceramic skeleton 1. The inner surface of the ceramic skeleton 1 encompasses inner surfaces of the macropores 2 and the mesopores 3 present internally in the ceramic skeleton 1 (i.e., not exposed on the outer surface of the ceramic skeleton 1), and the outer surface of the ceramic skeleton 1 encompasses inner surfaces of the macropores 2 and the mesopores 3 exposed on the outer surface of the ceramic skeleton 1. It is preferable that at least the inner surface of the ceramic skeleton 1 is modified with the nitrogen atom-containing group and the phosphorus atom-containing group.

The nitrogen atom-containing group is preferably at least one selected from a primary amino group, a secondary amino group, a tertiary amino group, a quaternary ammonium group, an imino group, and a nitrilo group, and more preferably at least one selected from a primary amino group, a secondary amino group, a tertiary amino group, an imino group, and a nitrilo group.

The primary amino group is represented by the formula: -NH₂. The secondary amino group is represented by the formula: -NHR¹. The tertiary amino group is represented by the formula: -NR¹R². The quaternary ammonium group is represented by the formula: -N⁺R¹R²R³. R¹, R², and R³ are each independently, for example, a substituted or unsubstituted alkyl group, a substituted or unsubstituted aryl group, a substituted or unsubstituted arylalkyl group, or a substituted or unsubstituted alkylaryl group. The secondary amino group and the tertiary amino group may each be an aliphatic amino group or an aromatic amino group, preferably an aliphatic amino group. Examples of the aliphatic amino group include a secondary amino group in which R¹ is a substituted or unsubstituted alkyl group, and a tertiary amino group in which both R¹ and R² are each a substituted or unsubstituted alkyl group. Examples of the aromatic amino group include a secondary amino group in which R¹ is a substituted or unsubstituted aryl group, a substituted or unsubstituted arylalkyl group, or a substituted or unsubstituted alkylaryl group, and a tertiary amino group in which at least one of R¹ and R² is a substituted or unsubstituted aryl group, a substituted or unsubstituted arylalkyl group, or a substituted or unsubstituted alkylaryl group. The quaternary ammonium group may be an aliphatic ammonium group or an aromatic ammonium group, and the aliphatic ammonium group is preferable. Examples of the aliphatic ammonium group include a quaternary ammonium group in which R¹, R², and R³ are each independently a substituted or unsubstituted alkyl group. Examples of the aromatic ammonium group include a quaternary ammonium group in which at least one of R', R², and R³ is a substituted or unsubstituted aryl group, a substituted or unsubstituted arylalkyl group, or a substituted or unsubstituted alkylaryl group.

The "alkyl group" is, for example, an alkyl group having 1 to 10 carbon atoms. The alkyl group may be linear or branched. The number of carbon atoms in the alkyl group is preferably 1 to 8, more preferably 1 to 6, still more preferably 1 to 5, and even more preferably 1 to 4.

The "aryl group" is, for example, a monocyclic or polycyclic (e.g., bicyclic or tricyclic) aromatic hydrocarbon group having 4 to 14 carbon atoms. The polycyclic group may be a fused ring group. Examples of the aryl group include a phenyl group and a naphthyl group. The number of carbon atoms in the aryl group is preferably 6 to 14, more preferably 6 to 10.

The "arylalkyl group" refers to an alkyl group having one or more aryl groups, and the descriptions of the alkyl group and the aryl group are the same as described above. The number of aryl groups in the arylalkyl group is, for example, 1, 2, or 3.

The "alkylaryl group" refers to an aryl group having one or more alkyl groups, and the descriptions of the alkyl group and the aryl group are the same as described above. The number of alkyl groups in the alkylaryl group is, for example, 1, 2, or 3.

The number of substituents that the alkyl group, aryl group, arylalkyl group, or alkylaryl group can have is, for example, 1, 2, or 3. Examples of the substituent include a hydroxyl group, a halogen atom, a thiol group, a carboxyl group, a sulfate group, a keto group, an alkoxy group, and an oxo group. The halogen atom is selected from a fluorine atom, a chlorine atom, a bromine atom, and an iodine atom. The alkoxy group is a group represented by the formula: - O-alkyl group or -aryl group, and the descriptions of the alkyl group and the aryl group are the same as described above.

Examples of the secondary amino group include aliphatic amino groups such as an N-methylamino group, an N-ethylamino group, an N-propylamino group, and an N-isopropylamino group, and aromatic amino groups such as an N-phenylamino group (anilino group).

Examples of the tertiary amino group include aliphatic amino groups such as an N,N-dimethylamino group, an N,N-diethylamino group, an N,N-methylethylamino group, an N,N-dipropylamino group, and an N,N-diisopropylamino group, and aromatic amino groups such as an N,N-diphenylamino group.

Examples of the quaternary ammonium group include trialkylammonium groups such as a trimethylammonium group, a triethylammonium group, and a tributylammonium group. Examples of a counter ion to a nitrogen atom constituting the quaternary ammonium group include a chloride ion, a bromide ion, and a hydroxide ion.

The "imino group" refers to a divalent group represented by the formula: =NH or the formula: -NH-. The imino group may be bound to one carbon atom via a double bond (i.e., C=NH), or may be bound to two carbon atoms via single bonds (i.e., C-NH-C), and the latter is preferable. The -NH- in the secondary amino group (-NHR¹) may correspond to the imino group, and the secondary amino group is preferably a terminal group. In other words, R¹ in the secondary amino group (-NHR₁) preferably does not have any nitrogen atom-containing group that is at least one selected from a primary amino group, a secondary amino group, a tertiary amino group, a quaternary ammonium group, an imino group, and a nitrilo group.

The "nitrilo group" refers to a trivalent group represented by the formula: ≡N or the formula: -N<. The nitrilo group may be bound to one carbon atom via a triple bond (i.e., C≡N), or may be bound to three carbon atoms via single bonds (i.e., C-N(-C)-C), and the latter is preferable. In the former case, the nitrilo group, together with one carbon atom, forms a cyano group (-CN). The -N< in the tertiary amino group (-NR¹R²) may correspond to the nitrilo group, and the tertiary amino group is preferably a terminal group. In other words, both R¹ and R² in the tertiary amino group (-NR¹R²) preferably do not have any nitrogen atom-containing group that is at least one selected from a primary amino group, a secondary amino group, a tertiary amino group, a quaternary ammonium group, an imino group, and a nitrilo group.

The phosphorus atom-containing group is preferably at least one selected from a phosphinate group, a phosphonate group, a phosphate group, a phosphinous acid group, a phosphonous acid group, a phosphite group, a phosphine group, and a phosphine oxide group, more preferably at least one selected from a phosphinate group, a phosphonate group, and a phosphate group, and still more preferably a phosphonate group.

The "phosphinate group" refers to a monovalent group represented by the formula (1): -PH(=O)(OX¹) [wherein X¹ represents a hydrogen atom or an alkali metal element such as Na], or a monovalent group in which one or more H atoms (including a H atom in a hydroxy group) in the formula (1) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphonate group" refers to a monovalent group represented by the formula (2): -P(=O)(OX²)₂ [wherein X² each independently represents a hydrogen atom or an alkali metal element such as Na], or a monovalent group in which one or more H atoms in the formula (2) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphate group" refers to a monovalent group represented by the formula (3): -O-P(=O)(OX³)₂ [wherein X³ each independently represents a hydrogen atom or an alkali metal element such as Na], or a monovalent group in which one or more H atoms in the formula (3) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphinous acid group" refers to a monovalent group represented by the formula (4): -PH(OX⁴) [wherein X⁴ represents a hydrogen atom or an alkali metal element such as Na], or a monovalent group in which one or more H atoms (including a H atom in a hydroxy group) in the formula (4) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphonous acid group" refers to a monovalent group represented by the formula (5): -P(OX⁵)₂ [wherein X⁵ each independently represents a hydrogen atom or an alkali metal element such as Na], or a monovalent group in which one or more H atoms in the formula (5) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphite group" refers to a monovalent group represented by the formula (6): -O-P(OX⁶)₂ [wherein X⁶ each independently represents a hydrogen atom or an alkali metal element such as Na], or a monovalent group in which one or more H atoms in the formula (6) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphine group" refers to a monovalent group represented by the formula (7): -PH₂, or a monovalent group in which one or more H atoms in the formula (7) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

The "phosphine oxide group" refers to a monovalent group represented by the formula (8): -PH₂(=O), or a monovalent group in which one or more H atoms in the formula (8) are each independently substituted with a substituted or unsubstituted alkyl group, a substituted or unsubstituted aryl group, a substituted or unsubstituted arylalkyl group, a substituted or unsubstituted alkylaryl group, or the like. The descriptions of the substituted or unsubstituted alkyl group, substituted or unsubstituted aryl group, substituted or unsubstituted arylalkyl group, and substituted or unsubstituted alkylaryl group are the same as those for the nitrogen atom-containing group.

In one embodiment, a first compound containing the nitrogen atom-containing group and the phosphorus atom-containing group is fixed to the surface of the ceramic skeleton 1, so that the surface of the ceramic skeleton 1 is modified with the nitrogen atom-containing group and the phosphorus atom-containing group. Examples of the method of introducing the first compound to the surface of the ceramic skeleton 1 include a method involving chemically fixing the first compound (e.g., a silane coupling agent having the nitrogen atom-containing group and the phosphorus atom-containing group) to the surface of the ceramic skeleton 1 via a covalent bond, and a method involving physically fixing the first compound to the surface of the ceramic skeleton 1 through an ion bond or physical interaction such as hydrophobic interaction. Examples of the method involving chemically introducing the first compound to the surface of the ceramic skeleton 1 include a method involving reacting a functional group (e.g., a hydroxyl group) on the surface of the ceramic skeleton 1 with a silane coupling agent having the nitrogen atom-containing group and the phosphorus atom-containing group to thereby chemically fix the silane coupling agent to the surface of the ceramic skeleton 1. The first compound may be fixed to the surface of the ceramic skeleton 1 via a linker. For example, a functional group reactive with the first compound may be introduced to the surface of the ceramic skeleton 1, and thereafter the introduced functional group and the first compound may be reacted to thereby chemically fix the first compound to the surface of the ceramic skeleton 1. Examples of the method involving introducing the functional group reactive with the first compound to the surface of the ceramic skeleton 1 include a method involving reacting a functional group (e.g., a hydroxyl group) on the surface of the ceramic skeleton 1 with a silane coupling agent having the functional group reactive with the first compound to thereby chemically fix the silane coupling agent to the surface of the ceramic skeleton 1. Examples of the silane coupling agent having the functional group reactive with the first compound include a silane coupling agent having an epoxy group and/or a haloalkyl group. Examples of the silane coupling agent having an epoxy group include 3-glycidyloxypropyltrimethoxysilane. Examples of the silane coupling agent having a haloalkyl group include 3-chloropropyltrimethoxysilane.

After fixing a compound containing the nitrogen atom-containing group and not containing the phosphorus atom-containing group (e.g., a silane coupling agent having the nitrogen atom-containing group and not having the phosphorus atom-containing group) on the surface of the ceramic skeleton 1, the phosphorus atom-containing group may be introduced to the fixed compound. Thus, in a case where a compound fixed to the surface of the ceramic skeleton 1 does not initially contain both the nitrogen atom-containing group and the phosphorus atom-containing group, but ultimately contains both the nitrogen atom-containing group and the phosphorus atom-containing group through derivatization of the compound, such a case is encompassed within the expression that "a first compound containing the nitrogen atom-containing group and the phosphorus atom-containing group is fixed to the surface of the ceramic skeleton 1, so that the surface of the ceramic skeleton 1 is modified with the nitrogen atom-containing group and the phosphorus atom-containing group".

As the first compound, for example, an amine compound to which the phosphorus atom-containing group has been introduced can be used. In a case where an amine compound to which the phosphorus atom-containing group has been introduced is used as the first compound, after fixing the amine compound to the surface of the ceramic skeleton 1, the phosphorus atom-containing group may be introduced to the fixed amine compound.

The amine compound is not particularly limited as long as it contains at least one nitrogen atom-containing group selected from a primary amino group, a secondary amino group, a tertiary amino group, a quaternary ammonium group, an imino group, and a nitrilo group. The amine compound preferably contains at least one nitrogen atom-containing group selected from a primary amino group, a secondary amino group, an imino group, and a nitrilo group. A moiety of the amine compound, other than the nitrogen atom-containing group, may be constituted by a hydrogen atom and a carbon atom, or may contain, in addition to a hydrogen atom and a carbon atom, one or two or more other elements (e.g., an oxygen atom, a sulfur atom, a halogen atom, and/or a silicon atom).

For example, at least one compound selected from a monoamine, a diamine, a triamine, and a polyamine can be used as the amine compound. Two or more amine compounds may be used. The amine compound may be a silane coupling agent.

Examples of a silane coupling agent containing at least one nitrogen atom-containing group selected from a primary amino group, a secondary amino group, a tertiary amino group, a quaternary ammonium group, an imino group, and a nitrilo group include a silane coupling agent represented by the formula A, B, or C.

Formula A: R^{a}-R^{d}-Si(-R^{b})ₙ(-R^{c})₃₋ₙ

Formula B: R^{a}-R^{d}-NH-R^{e}-Si(-R^{b})ₙ(-R^{c})₃₋ₙ

Formula C: R^{a}-R^{d}-NH-R^{e}-NH-R^{f}-Si(-R^{b})ₙ(-R^{c})₃₋ₙ

In the formulae A, B, and C, R^{a} represents a primary amino group, a secondary amino group, a tertiary amino group, or a quaternary ammonium group; n R^{b} each independently represent a linear or branched alkyl group having 1 to 10, preferably 1 to 8, more preferably 1 to 6, still more preferably 1 to 5, and even more preferably 1 to 4 carbon atoms; (3-n) R^{c} each independently represent a linear or branched alkoxy group having 1 to 10, preferably 1 to 8, more preferably 1 to 6, still more preferably 1 to 5, and even more preferably 1 to 4 carbon atoms, or a halogen group; R^{d}, R^{e}, and R^{f} each independently represent a linear or branched alkylene group having 1 to 10, preferably 1 to 8, more preferably 1 to 6, still more preferably 1 to 5, and even more preferably 1 to 4 carbon atoms, an arylene group having 4 to 14, preferably 6 to 14, more preferably 6 to 10 carbon atoms, or a combination thereof; and n represents an integer of 0 to 2. The "alkylene group" and the "arylene group" each refer to a divalent functional group generated by removal of one hydrogen atom from an alkyl group and an aryl group, respectively, and the descriptions of the alkyl group and the aryl group are the same as described above.

R^{a} is preferably selected from a primary amino group, a secondary amino group, and a tertiary amino group; more preferably selected from a primary amino group and a secondary amino group; and still more preferably a primary amino group.

Examples of the alkyl group represented by R^{b} include a methyl group, an ethyl group, a propyl group, and a butyl group.

Examples of the alkoxy group or the halogen group represented by R^{c} include a methoxy group, an ethoxy group, a propoxy group, a butoxy group, a chloro group, a bromo group, and an iodo group. The alkoxy group represented by R^{c} is preferably a methoxy group or an ethoxy group. The halogen group represented by R^{c} is preferably a chloro group.

Examples of the alkylene group represented by R^{d}, R^{e}, or R^{f} include a methylene group, an ethylene group, a propylene group, and a butylene group.

Examples of the arylene group represented by R^{d}, R^{e}, or R^{f} include a phenylene group, a naphthylene group, and a biphenylene group.

Examples of the combination of the alkylene group and the arylene group represented by R^{d}, R^{e}, or R^{f} include a group represented by the formula: -X-Y-, the formula: -Y-X-, the formula: -X-Y-X-, or the formula: -Y-X-Y-. In the formulae, X represents an alkylene group, and Y represents an arylene group.

The alkylene groups, the arylene groups, or the combinations thereof represented by R^{d}, R^{e}, and R^{f} may each have a substituent(s). The number of the substituent(s) is, for example, 1, 2, or 3. Examples of the substituent(s) include a hydroxyl group, a halogen atom, a thiol group, a carboxyl group, a sulfate group, a keto group, an alkoxy group, and an oxo group. Examples of the halogen are the same as described above. The description of the alkoxy group is the same as described above.

The monoamine has one nitrogen atom-containing group selected from a primary amino group, a secondary amino group, a tertiary amino group, a quaternary ammonium group, an imino group, and a nitrilo group, preferably one nitrogen atom-containing group selected from a primary amino group, a secondary amino group, an imino group, and a nitrilo group. Examples of the monoamine include a silane coupling agent represented by the formula A, and examples of the silane coupling agent represented by the formula A include 3-aminopropyltrimethoxysilane, 3-aminopropyltriethoxysilane, and 3-(N-phenyl)aminopropyltrimethoxysilane.

The diamine has two nitrogen atom-containing groups selected from a primary amino group, a secondary amino group, a tertiary amino group, a quaternary ammonium group, an imino group, and a nitrilo group, preferably two nitrogen atom-containing groups selected from a primary amino group, a secondary amino group, an imino group, and a nitrilo group. The two nitrogen atom-containing groups may be the same or different. Examples of the diamine include a silane coupling agent represented by the formula B, and examples of the silane coupling agent represented by the formula B include 3-(2-aminoethylamino)propyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, and N-(vinylbenzyl)-2-aminoethyl-3-aminopropyltrimethoxysilane hydrochloride.

The triamine has three nitrogen atom-containing groups selected from a primary amino group, a secondary amino group, a tertiary amino group, a quaternary ammonium group, an imino group, and a nitrilo group, preferably three nitrogen atom-containing groups selected from a primary amino group, a secondary amino group, an imino group, and a nitrilo group. The three nitrogen atom-containing groups may be the same or different. Examples of the triamine include a silane coupling agent represented by the formula C, and examples of the silane coupling agent represented by the formula C include 3-[2-(2-aminoethylamino)ethylamino]propyltrimethoxysilane.

The polyamine has four or more nitrogen atom-containing groups selected from a primary amino group, a secondary amino group, a tertiary amino group, a quaternary ammonium group, an imino group, and a nitrilo group, preferably four or more nitrogen atom-containing groups selected from a primary amino group, a secondary amino group, an imino group, and a nitrilo group. The four or more nitrogen atom-containing groups may be the same or different. Examples of the polyamine include polyalkyleneimine, polyvinylamine, and polyallylamine.

Examples of the polyalkyleneimine include a polymer obtained by polymerizing one or two or more alkyleneamines by a conventional method. The polyalkyleneimine may be a chemically modified polymer obtained by reacting a polymer obtained by polymerizing one or two or more alkyleneamines by a conventional method, with a desired compound. The polyalkyleneimine may be linear or branched. Examples of the polyalkyleneimine include triethylenetetramine, tetraethylenepentamine, pentaethylenehexamine, polyethyleneimine, polypropyleneimine, and polybutyleneimine.

The weight average molecular weight of the polyalkyleneimine is, for example, 146 or more and 30000 or less, preferably 146 or more and 15000 or less, more preferably 146 or more and 5000 or less, and still more preferably 146 or more and 1800 or less. The weight average molecular weight of the polyvinylamine is, for example, 174 or more and 25000 or less, preferably 174 or more and 6000 or less. The weight average molecular weight of the polyallylamine is, for example, 230 or more and 150000 or less, preferably 230 or more and 15000 or less, more preferably 230 or more and 8000 or less, and still more preferably 230 or more and 5000 or less. The weight average molecular weight can be measured, for example, by a gel permeation chromatography (GPC) method using polystyrene as a standard substance.

The phosphorus atom-containing group can be introduced to the amine compound by a conventional method.

In one embodiment, the amine compound contains at least one group selected from a primary amino group, a secondary amino group, and an imino group. Examples of the method of introducing the phosphorus atom-containing group to an amine compound containing at least one group selected from a primary amino group, a secondary amino group, and an imino group includes a method involving contacting the amine compound containing at least one group selected from a primary amino group, a secondary amino group, and an imino group, formaldehyde or alkyl aldehyde, and a phosphorus atom-containing compound in the presence of an acid catalyst. After fixing the amine compound to the surface of the ceramic skeleton 1, the phosphorus atom-containing group may be introduced to the fixed amine compound by the method described above. The phosphorus atom-containing compound can be selected, for example, from a phosphinic acid, a phosphonic acid, a phosphoric acid, a phosphinous acid, a phosphonous acid, a phosphorous acid, a phosphine, and a phosphine oxide. Among the phosphinic acid, the phosphonic acid, the phosphoric acid, the phosphinous acid, the phosphonous acid, the phosphorous acid, the phosphine, and the phosphine oxide, the phosphinic acid, the phosphonic acid, and the phosphoric acid are preferable, and the phosphonic acid is more preferable. As the acid catalyst, for example, hydrochloric acid, acetic acid, and the like can be used. Formaldehyde produced by dissolving paraformaldehyde in water may be used. An alkyl aldehyde produced by dissolving polyacetal in water may be used.

Examples of the amine compound to which the phosphorus atom-containing group has been introduced include an amine compound having one or two or more functional groups selected from the functional groups represented by the formulae D to G. Hereinafter, the functional groups represented by the formulae D to G will be described.

When an amine compound containing a primary amino group is brought into contact with formaldehyde or an alkyl aldehyde, and a phosphinic acid, a phosphonic acid, a phosphoric acid, a phosphinous acid, a phosphonous acid, a phosphorous acid, a phosphine, or a phosphine oxide in the presence of an acid catalyst, the primary amino group contained in the amine compound is derivatized, resulting in the functional group represented by the formula D and/or the functional group represented by the formula E.

Formula D: -NH-R¹²-R¹¹

Formula E: -N (-R¹⁴-R¹³)-R¹²-R¹¹

In the formulae D and E, R¹¹ and R¹³ each independently represent a phosphinate group, a phosphonate group, a phosphate group, a phosphinous acid group, a phosphonous acid group, a phosphite group, a phosphine group, or a phosphine oxide group, preferably a phosphinate group, a phosphonate group, or a phosphate group, and more preferably a phosphonate group. R¹² and R¹⁴ each independently represent a linear or branched alkylene group having 1 to 10, preferably 1 to 8, more preferably 1 to 6, still more preferably 1 to 5, and even more preferably 1 to 4 carbon atoms. When formaldehyde is used for the formation of R¹² and R¹⁴, the number of carbon atoms in R¹² and R¹⁴ is equal to the number of carbon atoms in formaldehyde. When an alkyl aldehyde is used for the formation of R¹² and R¹⁴, the number of carbons in R¹² and R¹⁴ is equal to the number of carbon atoms in the alkyl aldehyde.

The functional group represented by the formula D and the functional group represented by the formula E each contain the nitrogen atom-containing group and the phosphorus atom-containing group (i.e., the functional groups each correspond to the nitrogen/phosphorus-containing group). The nitrogen atom-containing group contained in the functional group represented by the formula D is an imino group (-NH-), and the phosphorus atom-containing group contained in the functional group represented by the formula D is a phosphinate group, a phosphonate group, a phosphate group, a phosphinous acid group, a phosphonous acid group, a phosphite group, a phosphine group, or a phosphine oxide group. The phosphorus atom-containing group contained in the functional group represented by the formula D is preferably a phosphinate group, a phosphonate group, or a phosphate group, and more preferably a phosphonate group. The nitrogen atom-containing group contained in the functional group represented by the formula E is a nitrilo group (-N<), and the phosphorus atom-containing group contained in the functional group represented by Formula E is a phosphinate group, a phosphonate group, a phosphate group, a phosphinous acid group, a phosphonous acid group, a phosphite group, a phosphine group, or a phosphine oxide group. The phosphorus atom-containing group contained in the functional group represented by the formula E is preferably a phosphinate group, a phosphonate group, or a phosphate group, and more preferably a phosphonate group.

When an amine compound containing an imino group (-NH-) is brought into contact with formaldehyde or an alkyl aldehyde, and a phosphinic acid, a phosphonic acid, a phosphoric acid, a phosphinous acid, a phosphonous acid, a phosphorous acid, a phosphine, or a phosphine oxide in the presence of an acid catalyst, the imino group contained in the amine compound is derivatized, resulting in the functional group represented by the formula F.

Formula F: -N(-R¹⁶-R¹⁵)-

In the formula F, R¹⁵ represents a phosphinate group, a phosphonate group, a phosphate group, a phosphinous acid group, a phosphonous acid group, a phosphite group, a phosphine group, or a phosphine oxide group, preferably a phosphinate group, a phosphonate group, or a phosphate group, and more preferably a phosphonate group. R¹⁶ represents a linear or branched alkylene group having 1 to 10, preferably 1 to 8, more preferably 1 to 6, still more preferably 1 to 5, and even more preferably 1 to 4 carbon atoms. When formaldehyde is used for the formation of R¹⁶, the number of carbon atoms in R¹⁶ is equal to the number of carbon atoms in formaldehyde. When an alkyl aldehyde is used for the formation of R¹⁶, the number of carbon atoms in R¹⁶ is equal to the number of carbon atoms in the alkyl aldehyde.

The functional group represented by the formula F contains the nitrogen atom-containing group and the phosphorus atom-containing group (i.e., the functional group corresponds to the nitrogen/phosphorus-containing group). The nitrogen atom-containing group contained in the functional group represented by the formula F is a nitrilo group (-N<), and the phosphorus atom-containing group contained in the functional group represented by the formula F is a phosphinate group, a phosphonate group, a phosphate group, a phosphinous acid group, a phosphonous acid group, a phosphite group, a phosphine group, or a phosphine oxide group. The phosphorus atom-containing group contained in the functional group represented by the formula F is preferably a phosphinate group, a phosphonate group, or a phosphate group, and more preferably a phosphonate group.

When an amine compound containing a secondary amino group (-NHR¹) is brought into contact with formaldehyde or an alkyl aldehyde, and a phosphinic acid, a phosphonic acid, a phosphoric acid, a phosphinous acid, a phosphonous acid, a phosphorous acid, a phosphine, or a phosphine oxide in the presence of an acid catalyst, the secondary amino group contained in the amine compound is derivatized, resulting in the functional group represented by the formula G. Formula G: -NR¹ (-R¹⁸-R¹⁷)

In the formula G, R¹⁷ represents a phosphinate group, a phosphonate group, a phosphate group, a phosphinous acid group, a phosphonous acid group, a phosphite group, a phosphine group, or a phosphine oxide group, preferably a phosphinate group, a phosphonate group, or a phosphate group, and more preferably a phosphonate group. R¹⁸ represents a linear or branched alkylene group having 1 to 10, preferably 1 to 8, more preferably 1 to 6, still more preferably 1 to 5, and even more preferably 1 to 4 carbon atoms. When formaldehyde is used for the formation of R¹⁸, the number of carbon atoms in R¹⁸ is equal to the number of carbon atoms in formaldehyde. When an alkyl aldehyde is used for the formation of R¹⁸, the number of carbon atoms in R¹⁸ is equal to the number of carbon atoms in the alkyl aldehyde.

The functional group represented by the Formula G contains the nitrogen atom-containing group and the phosphorus atom-containing group (i.e., the functional group corresponds to the nitrogen/phosphorus-containing group). The nitrogen atom-containing group contained in the functional group represented by the formula G is a nitrilo group (-N<), and the phosphorus atom-containing group contained in the functional group represented by the formula G is a phosphinate group, a phosphonate group, a phosphate group, a phosphinous acid group, a phosphonous acid group, a phosphite group, a phosphine group, or a phosphine oxide group. The phosphorus atom-containing group contained in the functional group represented by the formula G is preferably a phosphinate group, a phosphonate group, or a phosphate group, and more preferably a phosphonate group.

Examples of the amine compound to which the phosphorus atom-containing group has been introduced include a silane coupling agent represented by the formula H, I, or J.

Formula H: R¹¹-R¹²-N(-L¹)-R^{d}-Si(-R^{b})ₙ(-R^{c})₃₋ₙ

Formula I: R¹¹-R¹²-N(-L¹)-R^{d}-N(-L²)-R^{e}-Si(-R^{b})ₙ(-R^{c})₃₋ₙ

Formula J: R¹¹-R¹²-N(-L¹)-R^{d}-N(-L²)-R^{e}-N(-L³)-R^{f}-Si(-R^{b})ₙ(-R^{c})₃₋ₙ

In the formulae H, I, and J, L¹ represents a hydrogen atom or a group represented by the formula: -R¹⁴-R¹³, preferably the group represented by the formula: -R¹⁴-R¹³. L² and L³ each independently represent a hydrogen atom or a group represented by the formula: -R¹⁶-R¹⁵, preferably the group represented by the formula: -R¹⁶-R¹⁵. R¹¹, R¹², R¹³, R¹⁴, R¹⁵, R¹⁶, R^{b}, R^{c}, R^{d}, R^{e}, R^{f}, and n are the same as described above. When L² and L³ are each the group represented by the formula: -R¹⁶-R¹⁵, L² and L³ may be the same or different.

The silane coupling agent represented by the formula H can be obtained by derivatizing the silane coupling agent represented by the formula A. The silane coupling agent represented by the formula I can be obtained by derivatizing the silane coupling agent represented by the formula B. The silane coupling agent represented by the formula J can be obtained by derivatizing the silane coupling agent represented by the formula C.

In one embodiment, a second compound containing the nitrogen atom-containing group and a third compound containing the phosphorus atom-containing group are fixed to the surface of the ceramic skeleton 1, so that the surface of the ceramic skeleton 1 is modified with the nitrogen atom-containing group and the phosphorus atom-containing group. The second compound may contain the phosphorus atom-containing group, but usually does not contain the phosphorus atom-containing group. The third compound may contain the nitrogen atom-containing group, but usually does not contain the nitrogen atom-containing group. The method of introducing the second and third compounds to the surface of the ceramic skeleton 1 is the same as the method of introducing the first compound to the surface of the ceramic skeleton 1.

As the second compound, for example, an amine compound can be used. The description of the amine compound is the same as described above.

As the third compound, for example, a phosphorus atom-containing compound, such as a phosphinic acid, a phosphonic acid, a phosphoric acid, a phosphinous acid, a phosphonous acid, a phosphorous acid, a phosphine, or a phosphine oxide, can be used.

A porous body in which the surface of the ceramic skeleton 1 is modified with the nitrogen atom-containing group and the phosphorus atom-containing group exhibits excellent adsorption performance compared to conventional adsorbents (e.g., mesoporous silica or ion exchange resins), due to the synergistic effect of the nitrogen atom-containing group and the phosphorus atom-containing group. In a case where a solution containing a metal and/or a metal ion is brought into contact with an adsorbent, the adsorption performance of the adsorbent can be evaluated based on the adsorption rate calculated based on the amount of the metal and/or the metal ion adsorbed by the adsorbent (the percentage of the amount of the metal and/or the metal ion adsorbed by the adsorbent relative to the amount of the metal and/or the metal ion originally contained in the solution). In a case where a solution containing a metal and/or a metal ion is brought into contact with an adsorbent for a predetermined period of time, the adsorption performance of the adsorbent can be evaluated based on the adsorption rate calculated from the amount of the metal and/or the metal ion adsorbed by the adsorbent, or the adsorption speed calculated by dividing the amount of the metal and/or the metal ion adsorbed by the adsorbent by the predetermined period of time. The "adsorption performance" in the present invention refers to both the adsorption rate and the adsorption speed. In the present invention, priority is given to the adsorption speed over the adsorption rate, considering that the recovery speed of a substance to be adsorbed is important in practical use of the adsorbent.

From the viewpoint of more effectively improving adsorption performance through the synergistic effect of the nitrogen atom-containing group and the phosphorus atom-containing group, it is preferable that the first compound is fixed to the surface of the ceramic skeleton 1, so that the surface of the ceramic skeleton 1 is modified with the nitrogen atom-containing group and the phosphorus atom-containing group. From the same viewpoint, it is preferable that the first compound is an amine compound to which the phosphorus atom-containing group has been introduced, and more preferably the silane coupling agent represented by the formula H, I, or J.

From the viewpoint of more effectively improving adsorption performance through the synergistic effect of the nitrogen atom-containing group and the phosphorus atom-containing group, the total amount of the nitrogen atom-containing group and the phosphorus atom-containing group contained in the porous body is 0.5 mmol/g or more and 6.0 mmol/g or less, preferably 1.0 mmol/g or more and 5.5 mmol/g or less, more preferably 1.5 mmol/g or more and 5.0 mmol/g or less, and still more preferably 2.0 mmol/g or more and 4.5 mmol/g or less, based on the mass of the porous body.

From the viewpoint of more effectively improving adsorption performance through the synergistic effect of the nitrogen atom-containing group and the phosphorus atom-containing group, the amount of the nitrogen atom-containing group contained in the porous body is preferably 0.3 mmol/g or more and 2.0 mmol/g or less, more preferably 0.5 mmol/g or more and 1.5 mmol/g or less, and still more preferably 0.8 mmol/g or more and 1.5 mmol/g or less, based on the mass of the porous body. The nitrogen atom-containing group contained in the porous body is derived from a compound modifying the surface of the ceramic skeleton 1 and having the nitrogen atom-containing group. The "amount of the nitrogen atom-containing group" refers to, in a case where the porous body contains one nitrogen atom-containing group, the amount of the one nitrogen atom-containing group, and in a case where the porous body contains two or more nitrogen atom-containing groups, the total amount of the two or more nitrogen atom-containing groups. The "amount of the nitrogen atom-containing group" refers to the amount in terms of nitrogen atoms. The amount of the nitrogen atom-containing group can be measured according to a conventional method. For example, the amount of the nitrogen atom-containing group can be measured by the method described in the Examples below.

From the viewpoint of more effectively improving adsorption performance through the synergistic effect of the nitrogen atom-containing group and the phosphorus atom-containing group, the amount of the phosphorus atom-containing group contained in the porous body is preferably 0.2 mmol/g or more and 4.0 mmol/g or less, more preferably 0.5 mmol/g or more and 3.5 mmol/g or less, and still more preferably 1.0 mmol/g or more and 3.0 mmol/g or less, based on the mass of the porous body. The phosphorus atom-containing group contained in the porous body is derived from a compound modifying the surface of the ceramic skeleton 1 and having the phosphorus atom-containing group. The "amount of the phosphorus atom-containing group" refers to, in a case where the porous body contains one phosphorus atom-containing group, the amount of the one phosphorus atom-containing group, and in a case where the porous body contains two or more phosphorus atom-containing groups, the total amount of the two or more phosphorus atom-containing groups. The "amount of the phosphorus atom-containing group" refers to the amount in terms of phosphorus atoms. The amount of the phosphorus atom-containing group can be measured according to a conventional method. For example, the amount of the phosphorus atom-containing group can be measured by the method described in the Examples below.

From the viewpoint of more effectively improving adsorption performance through the synergistic effect of the nitrogen atom-containing group and the phosphorus atom-containing group, the mole ratio of the amount of the phosphorus atom-containing group contained in the porous body to the amount of the nitrogen atom-containing group contained in the porous body is preferably 0.5 or more and 2.5 or less, more preferably 0.8 or more and 2.0 or less, and still more preferably 1.0 or more and 2.0 or less. The present inventors assume that when the ratio of the amount of the phosphorus atom-containing group contained in the porous body to the amount of the nitrogen atom-containing group contained in the porous body is within the aforementioned range, the contribution of the chelate effect by nitrogen and phosphorus atoms becomes significant, and therefore an improvement in adsorption performance can be achieved more effectively.

From the viewpoint of more effectively improving adsorption performance through the synergistic effect of the nitrogen atom-containing group and the phosphorus atom-containing group, it is preferable that the distance between nitrogen and phosphorus atoms is short. The present inventors assume that when the distance is short, the contribution of the chelate effect by nitrogen and phosphorus atoms becomes significant, and therefore an improvement in adsorption performance can be achieved more effectively. When the first compound is fixed to the surface of the ceramic skeleton 1, the number of carbon atoms in an alkylene group linking the nitrogen atom-containing group and the phosphorus atom-containing group (an alkylene group present between the nitrogen atom-containing group and the phosphorus atom-containing group) is, for example, 1 to 10, preferably 1 to 8, more preferably 1 to 6, still more preferably 1 to 5, and even more preferably 1 to 4.

### << Adsorbent >>

The adsorbent of the present invention includes the porous body of the present invention. In the adsorbent of the present invention, the surface of the ceramic skeleton 1 is modified with the nitrogen atom-containing group and the phosphorus atom-containing group. The nitrogen atom-containing group and the phosphorus atom-containing group enable the porous body of the present invention to adsorb a metal and/or a metal ion. Examples of the metal that can be adsorbed by the porous body of the present invention include metals selected from: transition metals including rare earth metals; and typical elements of Group 12 to Group 15. Examples of the metal ion that can be adsorbed by the porous body of the present invention include metal ions selected from: transition metal ions including rare earth metal ions; and typical element ions of Group 12 to Group 15. Specifically, examples of the metal and the metal ion that can be adsorbed by the porous body of the present invention include indium (In), aluminum (Al), bismuth (Bi), lead (Pb), gold (Au), iridium (Ir), palladium (Pd), platinum (Pt), vanadium (V), chromium (Cr), manganese (Mn), iron (Fe), cobalt (Co), nickel (Ni), copper (Cu), zinc (Zn), silver (Ag), cadmium (Cd), tin (Sn), and metal ions thereof. Among these, it is preferable to apply the porous body of the present invention to In, Ir, Au, Sn, Pb, metal ions thereof, and the like, from the viewpoint of high demand for recovery by adsorption. Examples of the form of the metal adsorbed by the porous body of the present invention include a metal nanoparticle.

The adsorbent of the present invention is an adsorbent that adsorbs a metal and/or a metal ion, and is used for recovering the metal and/or the metal ion. The adsorbent of the present invention is, for example, packed into a column and used for recovering the metal and/or the metal ion.

### << Method of using adsorbent >>

A method of using the adsorbent of the present invention is a method of removing a metal and/or a metal ion from a solution containing the metal and/or the metal ion, and includes a step of bringing the solution containing the metal and/or the metal ion (hereinafter referred to as "liquid to be treated") into contact with the adsorbent of the present invention.

When the liquid to be treated is brought into contact with the adsorbent of the present invention, the metal and/or the metal ion contained in the liquid to be treated is adsorbed by the adsorbent of the present invention. As a result, the metal and/or the metal ion is/are removed from the liquid to be treated.

Examples of the liquid to be treated include a waste liquid discharged from a plant or the like, and a drainage containing valuable metals discharged in a metal refining step. The liquid to be treated usually contains water. The waste liquid may be subjected to contact with the adsorbent of the present invention optionally after pre-treatment.

The metal and/or the metal ion contained in the liquid to be treated is not limited as long as they can be adsorbed by the adsorbent of the present invention. The description of the metal and/or the metal ion is the same as described above.

Examples of the method of contacting the liquid to be treated with the adsorbent of the present invention include a method in which the adsorbent of the present invention is immersed in the liquid to be treated, and a method in which the liquid to be treated is passed through a column packed with the adsorbent of the present invention. Such passing of the liquid can be performed using, for example, a liquid feeding pump.

The adsorbent of the present invention is particularly useful for removing a metal and/or a metal ion from a liquid to be treated having a low concentration of a metal and/or a metal ion (the concentration of the metal and/or the metal ion is, for example, 0.2 ppm or more and 300 ppm or less, in particular, 0.2 ppm or more and 200 ppm or less).

### Examples

Hereinafter, the present invention is further specifically described with reference to Production Examples and Test Examples; however, the scope of the present invention is not limited to these Production Examples and Test Examples.

### [Example 1]

### (1) Production of silica monolith

To a 150 mL reaction container, 8.67 g of polyethylene glycol 10000 (manufactured by Sigma-Aldrich Co. LLC), 7.80 g of urea, and 86.7 g of an aqueous acetic acid solution with a concentration of 6.06% by mass were added, and stirred at room temperature for 10 minutes. The reaction container was placed in an ice bath, and the reaction solution was cooled with stirring for 15 minutes. To the cooled reaction solution, 44.7 g of tetramethoxysilane was added, and stirred for 30 minutes while being cooled in the ice bath. The reaction solution was warmed in a warm bath at 30°C, and then allowed to stand overnight in an incubator at 30°C to thereby produce a polysiloxane gel.

Next, the obtained polysiloxane gel was added to another reaction container containing 30 mL of 3 mol/L aqueous urea solution, and heated and refluxed for 12 hours. After completion of the reaction, the obtained polysiloxane gel was washed with water, and dried in a dryer set at 60°C for 12 hours. After drying, the polysiloxane gel was fired at 600°C for 5 hours in an air atmosphere to produce a silica monolith. The obtained silica monolith was pulverized and classified to obtain a silica monolith having a particle size of 300 µm or more and 1000 µm or less.

### (2) Observation with scanning electron microscope

The surface structure of the silica monolith obtained in (1) above was observed using a scanning electron microscope (JSM-7900F manufactured by JEOL Ltd.), and it was confirmed that the silica monolith has a co-continuous structure formed by: a silica skeleton including mesopores; and macropores.

### (3) Measurement of specific surface area and most frequent pore diameter of mesopores

The specific surface area and the most frequent pore diameter of mesopores were measured using a specific surface area/pore distribution measuring apparatus (BELSORP-miniX manufactured by MicrotracBEL Corp.). After degassing the silica monolith under reduced pressure at 400°C for 3 hours, the amounts of adsorption and desorption of nitrogen at a temperature of 77 K using liquid nitrogen were measured by a multipoint method, thereby determining an adsorption-desorption isotherm. Based on the adsorption-desorption isotherm, the specific surface area and the most frequent pore diameter were calculated. The specific surface area was calculated by the BET method, and the most frequent pore diameter was calculated by the BJH method.

The BJH method is a method of analyzing the distribution of pore volume with respect to pore diameter under the assumption that pores are cylindrical according to the standard model of Barrett-Joyner-Halenda (for details, see J. Amer. Chem. Soc., 73, 373, 1951). In the present invention, the analysis was conducted in the pore diameter range of 2 to 200 nm.

### (4) Measurement of total pore volume, most frequent pore diameter of macropores, and porosity

The total pore volume, most frequent pore diameter of macropores, and porosity were measured using a mercury porosimeter (AutoPore IV 9520 manufactured by Micromeritics Instrument Corporation) by the mercury intrusion method. In the mercury intrusion method, after allowing mercury to penetrate by applying pressure to pores of the silica monolith, the pore volume and the specific surface area were determined from the pressure and the amount of mercury intruded, and the pore diameter was calculated based on the relationship between the pore volume and the specific surface area under the assumption that pores are cylindrical. In the present invention, the analysis was conducted in the pore diameter range of 50 nm to 500 µm using the mercury intrusion method. The measurements were conducted under the following conditions and procedures.

### (Measurement conditions)

· Mercury parameters
   Advancing contact angle: 130.0°
   Receding contact angle: 130.0°
   Surface tension: 485.0 mN/m (485.0 dynes/cm)
   Mercury density: 13.5335 g/mL
· Low-pressure parameters
   Discharge pressure: 50 µmHg
   Discharge time: 5.0 minutes
   Mercury intrusion pressure: 0.0035 MPa
   Equilibrium time: 10 seconds
· High-pressure parameters
   Equilibrium time: 10 seconds
· Intrusion volume: modulated to 25% or more and 90% or less
· Measurement environment: 20°C

### (Measurement procedure)

(i) Weigh about 0.5 g of a sample, place it in a specimen cell, and input a weighed value.
(ii) Measure in the pressure range of 0.0048 to 0.2068 MPa at a low pressure portion.
(iii) Measure in the pressure range of 0.2068 to 255.1060 MPa at a high pressure portion.
   (ii) and (iii) were automatically performed using the software provided with the apparatus.

The results of (3) and (4) above are shown in Table 1.

### [Table 1]

**Table 1**

| | Before surface modification | | | | |
|---|---|---|---|---|---|
| | Specific surface area (m²/g) | Most frequent pore diameter of macropores (nm) | Most frequent pore diameter of mesopores (nm) | Total pore volume (mL) | Porosity (%) |
| Example 1 | 333 | 1284 | 19.2 | 3.4 | 82 |
| Example 2 | 333 | 1284 | 19.2 | 3.4 | 82 |
| Example 3 | 333 | 1284 | 19.2 | 3.4 | 82 |
| Example 4 | 333 | 1284 | 19.2 | 3.4 | 82 |
| Example 5 | 333 | 1284 | 19.2 | 3.4 | 82 |
| Example 6 | 333 | 1284 | 19.2 | 3.4 | 82 |
| Example 7 | 368 | 456 | 16.6 | 2.8 | 80 |
| Example 8 | 250 | 609 | 31.2 | 2.9 | 79 |
| Example 9 | 384 | 1046 | 19.0 | 3.2 | 81 |
| Example 10 | 338 | 3499 | 19.3 | 3.0 | 78 |
| Example 11 | 333 | 1284 | 19.2 | 3.4 | 82 |
| Comparative Example 1 | - | - | - | - | - |
| Comparative Example 2 | - | - | - | - | - |
| Comparative Example 3 | - | - | - | - | - |
| Comparative Example 4 | - | - | - | - | - |
| Comparative Example 5 | 333 | 1284 | 19.2 | 3.4 | 82 |
| Comparative Example 6 | 333 | 1284 | 19.2 | 3.4 | 82 |
| Comparative Example 7 | 333 | 1284 | 19.2 | 3.4 | 82 |

### (5) Production of silica monolith adsorbent modified with nitrogen atom-containing group

To a reaction container, 5.0 g of the silica monolith obtained in (1) above was added, and 35 mL of pure water and 3.73 g of 3-aminopropyltrimethoxysilane were added, and then heated and refluxed at 100°C for 4 hours. The silica monolith was separated from the solution by filtration, washed with 500 mL of pure water, and dried to obtain 6.44 g of a silica monolith adsorbent modified with a nitrogen atom-containing group. 3-Aminopropyltrimethoxysilane is a silane coupling agent represented by the formula: NH₂-CH₂CH₂CH₂-Si(-OCH₃)₃. The silica monolith adsorbent modified with the nitrogen atom-containing group, prepared using 3-aminopropyltrimethoxysilane, contains a primary amino group (-NH₂) as the nitrogen atom-containing group.

### (6) Production of silica monolith adsorbent modified with nitrogen/phosphorus-containing group

To a reaction container, 5.0 g of the silica monolith modified with the nitrogen atom-containing group, obtained in (5) above, was added, and 15 mL of pure water, 15 mL of hydrochloric acid, 4.5 mL of a 37% by mass aqueous formaldehyde solution, and 5.9 g of phosphonic acid were added, and then heated and refluxed at 100°C for 12 hours. The silica monolith was separated from the solution by filtration, washed with 500 mL of pure water, and dried to obtain 5.45 g of a silica monolith adsorbent modified with a nitrogen/phosphorus-containing group. By the above reaction, at least in part, the nitrogen atom-containing group (-NH₂) contained in the silica monolith modified with the nitrogen atom-containing group is converted to a nitrogen/phosphorus-containing group represented by the formula: -NH-CH₂-P(=O)(OH)₂ and/or a nitrogen/phosphorus-containing group represented by the formula: -N(-CH₂-P(=O)(OH)₂)-CH₂-P(=O)(OH)₂. In the nitrogen/phosphorus-containing group represented by the formula: -NH-CH₂-P(=O)(OH)₂, the imino group (-NH-) falls within the scope of the nitrogen atom-containing group, and the phosphonate group (-P(=O)(OH)₂) falls within the scope of the phosphorus atom-containing group. In the nitrogen/phosphorus-containing group represented by the formula: -N(-CH₂-P(=O)(OH)₂)-CH₂-P(=O)(OH)₂, the nitrilo group (-N<) falls into the scope of the nitrogen atom-containing group, and the phosphonate group (-P(=O)(OH)₂) falls into the phosphorus atom-containing group.

### (7A) Measurement of amount of nitrogen atom-containing group

The amount of the nitrogen atom-containing groups (-NH₂, -NH-, and - N<) contained in the silica monolith adsorbent modified with the nitrogen/phosphorus-containing group, obtained in (6) above, was quantitatively determined using an oxygen/nitrogen/hydrogen analyzer (ONH836 manufactured by LECO Japan Corporation). The results are shown in Table 2.

### (7B) Measurement of amount of phosphorus atom-containing group

The amount of the phosphorus atom-containing group (-P(=O)(OH)₂) contained in the silica monolith adsorbent modified with the nitrogen/phosphorus-containing group, obtained in (6) above, was quantitatively determined using an inductively coupled plasma (ICP) optical emission spectrometer (PS3520 UVDD manufactured by Hitachi, Ltd.). The results are shown in Table 2.

### [Table 2]

**Table 2**

| | After surface modification | | | |
|---|---|---|---|---|
| | Total amount of nitrogen atom-containing group and phosphorus atom-containing group [mmol/g] | Amount of nitrogen atom-containing group [mmol/g] | Amount of phosphorus atom-containing group [mmol/g] | Amount of phosphorus atom-containing group / amount of nitrogen atom-containing group |
| Example 1 | 3.1 | 1.1 | 2.0 | 1.8 |
| Example 2 | 2.0 | 0.8 | 1.2 | 1.5 |
| Example 3 | 2.1 | 1.1 | 1.0 | 0.9 |
| Example 4 | 3.2 | 1.2 | 2.0 | 1.6 |
| Example 5 | 2.7 | 1.4 | 1.3 | 1.0 |
| Example 6 | 2.8 | 1.1 | 1.7 | 1.6 |
| Example 7 | 4.3 | 1.5 | 2.8 | 1.8 |
| Example 8 | 3.5 | 1.4 | 2.1 | 1.5 |
| Example 9 | 3.4 | 1.2 | 2.2 | 1.9 |
| Example 10 | 2.8 | 1.0 | 1.8 | 1.8 |
| Example 11 | 3.5 | 1.5 | 2.0 | 1.3 |
| Comparative Example 1 | 2.0 | 0.8 | 1.2 | 1.5 |
| Comparative Example 2 | 2.7 | 1.4 | 1.3 | 1.0 |
| Comparative Example 3 | 2.4 | 1.2 | 1.2 | 1.0 |
| Comparative Example 4 | 4.4 | 1.9 | 2.5 | 1.3 |
| Comparative Example 5 | 2.0 | 2.0 | 0.0 | 0.0 |
| Comparative Example 6 | 3.0 | 3.0 | 0.0 | 0.0 |
| Comparative Example 7 | 4.8 | 0.0 | 4.8 | 0.0 |

### (8A) Metal adsorption test by immersion in solution

In order to evaluate metal elements that can be adsorbed by the silica monolith adsorbent modified with the nitrogen/phosphorus-containing group, obtained in (6) above, a metal adsorption test was conducted using a solution containing multiple metal elements. The adsorption rates shown in Tables 3 to 5 below are influenced by the types and/or combinations of the metal elements contained in the solution. Therefore, depending on the types and/or combinations of the metal elements contained in the solution, it is entirely possible that metal elements not adsorbed in this test may still be adsorbed by the silica monolith adsorbent modified with the nitrogen/phosphorus-containing group, obtained in (6) above.

300 mg of the silica monolith adsorbent modified with the nitrogen/phosphorus-containing group, obtained in (6) above, was immersed in 30 mL of an aqueous solution (containing 10 ppm of each metal element: Au, Ir, Os, Pd, Pt, Rh, and Ru), which was obtained by 10-fold dilution of TraceCERT Transition metal mix 3 for ICP solution (manufactured by Sigma-Aldrich Co. LLC) with pure water, and stirred at 25°C for 30 minutes. After completion of the reaction, the silica monolith adsorbent was separated by filtration, and the amount of each metal element contained in the resulting filtrate was analyzed using an ICP optical emission spectrometer (PS3520 UVDD manufactured by Hitachi, Ltd.). For each metal element, the percentage of the amount of the metal element adsorbed by the silica monolith adsorbent relative to the amount of the metal element originally contained in the aqueous solution (hereinafter referred to as "adsorption rate") was calculated. The adsorption rate for each metal element is shown in Table 3. As shown in Table 3, the silica monolith adsorbent modified with the nitrogen/phosphorus-containing group, obtained in (6) above, was able to adsorb Au and Ir.

### [Table 3]

**Table 3**

| Metal element | Au | Ir | Os | Pd | Pt | Rh | Ru |
|---|---|---|---|---|---|---|---|
| Adsorption rate (%) | 98 | 59 | 0 | 4 | 1 | 0 | 0 |

300 mg of the silica monolith adsorbent modified with the nitrogen/phosphorus-containing group, obtained in (6) above, was immersed in 30 mL of an aqueous solution (containing 10 ppm of each metal element: Al, Bi, Pb, and Ni), which was obtained by 10-fold dilution of ICP Standard Solution A (manufactured by KANTO CHEMICAL CO., INC.) with pure water, and stirred at 25°C for 30 minutes. After completion of the reaction, the silica monolith adsorbent was separated by filtration, and the amount of each metal element contained in the resulting filtrate was analyzed using an ICP optical emission spectrometer (PS3520 UVDD manufactured by Hitachi, Ltd.). For each metal element, the percentage of the amount of the metal element adsorbed by the silica monolith adsorbent relative to the amount of the metal element originally contained in the aqueous solution (hereinafter referred to as "adsorption rate") was calculated. The adsorption rate for each metal element is shown in Table 4. As shown in Table 4, the silica monolith adsorbent modified with the nitrogen/phosphorus-containing group, obtained in (6) above, was able to adsorb Al, Bi, and Pb.

### [Table 4]

**Table 4**

| Metal element | Al | Bi | Ni | Pb |
|---|---|---|---|---|
| Adsorption rate (%) | >99 | >99 | 0 | 46 |

300 mg of the silica monolith adsorbent modified with the nitrogen/phosphorus-containing group, obtained in (6) above, was immersed in 30 mL of an aqueous solution (containing 10 ppm of each metal element: V, Cr, Mn, Fe, Co, Ni, Cu, Zn, Ag, and Cd), which was obtained by 10-fold dilution of TraceCERT Transition metal mix 1 for ICP solution (manufactured by Sigma-Aldrich Co. LLC) with pure water, and stirred at 25°C for 30 minutes. After completion of the reaction, the silica monolith adsorbent was separated by filtration, and the amount of each metal element contained in the resulting filtrate was analyzed using an ICP optical emission spectrometer (PS3520 UVDD manufactured by Hitachi, Ltd.). For each metal element, the percentage of the amount of the metal element adsorbed by the silica monolith adsorbent relative to the amount of the metal element originally contained in the aqueous solution (hereinafter referred to as "adsorption rate") was calculated. The adsorption rate for each metal element is shown in Table 5. As shown in Table 5, the silica monolith adsorbent modified with the nitrogen/phosphorus-containing group, obtained in (6) above, was able to adsorb all of the metal elements contained in TraceCERT Transition metal mix 1 for ICP solution. In particular, high adsorption rates were observed for V, Cr, Mn, Fe, Zn, Ag, and Cd.

### [Table 5]

**Table 5**

| Metal element | V | Cr | Mn | Fe | Co | Ni | Cu | Zn | Ag | Cd |
|---|---|---|---|---|---|---|---|---|---|---|
| Adsorption rate (%) | 96 | 75 | 63 | >99 | 17 | 13 | 38 | 28 | >99 | 57 |

### (8B) Metal adsorption test by immersion in solution

In order to evaluate the adsorption ability of the silica monolith adsorbent modified with the nitrogen/phosphorus-containing group, obtained in (6) above, a metal adsorption test was conducted using a solution containing indium (In). 200 mg of the silica monolith adsorbent modified with the nitrogen/phosphorus-containing group, obtained in (6) above, was immersed in 30 mL of an aqueous solution, which was obtained by 10-fold dilution of indium standard stock solution (In1000) (manufactured by KANTO CHEMICAL CO., INC.) with nitric acid and pure water, and stirred at 25°C for 1 hour. The aqueous solution was prepared by mixing In1000 and nitric acid at a volume ratio of 10:1, and then adding pure water to achieve a 10-fold dilution. After completion of the reaction, the silica monolith adsorbent was separated by filtration, and the amount of indium element contained in the resulting filtrate was analyzed using an ICP optical emission spectrometer (PS3520 UVDD manufactured by Hitachi, Ltd.). The percentage of the amount of indium element adsorbed by the silica monolith adsorbent relative to the amount of indium element originally contained in the aqueous solution (hereinafter referred to as "adsorption rate") was calculated. The adsorption rate for indium element is shown in Table 6.

### (8C) Metal adsorption test by immersion in solution

60 mg of the silica monolith adsorbent modified with the nitrogen/phosphorus-containing group, obtained in (6) above, was immersed in 30 mL of an aqueous solution, which was obtained by 10-fold dilution of indium standard stock solution (In1000) (manufactured by KANTO CHEMICAL CO., INC.) with nitric acid and pure water, and stirred at 25°C for 10 minutes. The aqueous solution was prepared by mixing In1000 and nitric acid at a volume ratio of 10:1, and then adding pure water to achieve a 10-fold dilution. After completion of the reaction, the silica monolith adsorbent was separated by filtration, the amount of indium element contained in the resulting filtrate was analyzed using an ICP optical emission spectrometer (PS3520 UVDD manufactured by Hitachi, Ltd.), and the adsorption amount of indium element was calculated. The adsorption amount of indium element was divided by the adsorption time (10 minutes), and the adsorption speed (mg/h) of indium element was calculated. The adsorption speed for indium element is shown in Table 6.

### [Table 6]

**Table 6**

| | Adsorption test (8B) | Adsorption test (8C) |
|---|---|---|
| | Adsorption rate of In (%) | Adsorption speed of In (mg/h) |
| Example 1 | >99 | 15.4 |
| Example 2 | 96 | 11.0 |
| Example 3 | 98 | 11.4 |
| Example 4 | >99 | 12.7 |
| Example 5 | 94 | 7.7 |
| Example 6 | >99 | 15.8 |
| Example 7 | >99 | 15.0 |
| Example 8 | >99 | 14.2 |
| Example 9 | >99 | 13.2 |
| Example 10 | 99 | 12.5 |
| Example 11 | >99 | 14.0 |
| Comparative Example 1 | 99 | 5.7 |
| Comparative Example 2 | 99 | 6.8 |
| Comparative Example 3 | 61 | 2.5 |
| Comparative Example 4 | 36 | 1.3 |
| Comparative Example 5 | 1 | 0.4 |
| Comparative Example 6 | 1 | 0.3 |
| Comparative Example 7 | 14 | 2.9 |

### [Example 2]

The same operation as in Example 1 was performed, except that the amount of 3-aminopropyltrimethoxysilane used in the production of the silica monolith adsorbent modified with the nitrogen atom-containing group was changed to 0.75 g. The results are shown in Tables 1, 2, and 6.

### [Example 3]

The same operation as in Example 1 was performed, except that the amount of 3-aminopropyltrimethoxysilane used in the production of the silica monolith adsorbent modified with the nitrogen atom-containing group was changed to 1.49 g. The results are shown in Tables 1, 2, and 6.

### [Example 4]

The same operation as in Example 1 was performed, except that the amount of 3-aminopropyltrimethoxysilane used in the production of the silica monolith adsorbent modified with the nitrogen atom-containing group was changed to 5.97 g. The results are shown in Tables 1, 2, and 6.

### [Example 5]

The same operation as in Example 1 was performed, except that 0.9 g of paraformaldehyde and 2.9 g of phosphonic acid were used instead of 4.5 mL of a 37% by mass formaldehyde solution and 5.9 g of phosphonic acid in the production of the silica monolith adsorbent modified with the nitrogen/phosphorus-containing group. The results are shown in Tables 1, 2, and 6.

### [Example 6]

The same operation as in Example 1 was performed, except that the heating and refluxing time was changed to 24 hours in the production of the silica monolith adsorbent modified with the nitrogen/phosphorus-containing group. The results are shown in Tables 1, 2, and 6.

### [Example 7]

The same operation as in Example 1 was performed, except that the heating and refluxing time in 3 mol/L aqueous urea solution was changed to 5 hours in the production of the silica monolith adsorbent. The results are shown in Tables 1, 2, and 6.

### [Example 8]

The same operation as in Example 1 was performed, except that the heating and refluxing time in 3 mol/L aqueous urea solution was changed to 24 hours in the production of the silica monolith adsorbent. The results are shown in Tables 1, 2, and 6.

### [Example 9]

The same operation as in Example 1 was performed, except that the amount of polyethylene glycol 10000 (manufactured by Sigma-Aldrich Co. LLC) used in the production of the silica monolith adsorbent was changed to 9.08 g. The results are shown in Tables 1, 2, and 6.

### [Example 10]

The same operation as in Example 1 was performed, except that the amount of polyethylene glycol 10000 (manufactured by Sigma-Aldrich Co. LLC) used in the production of the silica monolith adsorbent was changed to 8.25 g. The results are shown in Tables 1, 2, and 6.

### [Example 11]

The same operation as in Example 1 was performed, except that the silane coupling agent used in the production of the silica monolith adsorbent modified with the nitrogen atom-containing group was changed to 4.63 g of 3-(2-aminoethylamino)propyltrimethoxysilane. The results are shown in Tables 1, 2, and 6.

3-(2-aminoethylamino)propyltrimethoxysilane is a silane coupling agent represented by the formula: NH₂-CH₂CH₂-NH-CH₂CH₂CH₂-Si(-OCH₃)₃. The silica monolith adsorbent modified with the nitrogen atom-containing group, obtained using 3-(2-aminoethylamino)propyltrimethoxysilane, contains a primary amino group (-NH₂) and an imino group (-NH-) as the nitrogen atom-containing group.

In the production of the silica monolith adsorbent modified with the nitrogen/phosphorus-containing group, at least in part, the primary amino group (-NH₂) contained in the silica monolith modified with the nitrogen atom-containing group is converted to a nitrogen/phosphorus-containing group represented by the formula: -NH-CH₂-P(=O)(OH)₂ and/or a nitrogen/phosphorus-containing group represented by the formula: -N(-CH₂-P(=O)(OH)₂)-CH₂-P(=O)(OH)₂. In the nitrogen/phosphorus-containing group represented by the formula: -NH-CH₂-P(=O)(OH)₂, the imino group (-NH-) falls within the scope of the nitrogen atom-containing group, and the phosphonate group (-P(=O)(OH)₂) falls within the scope of the phosphorus atom-containing group. In the nitrogen/phosphorus-containing group represented by the formula: -N(-CH₂-P(=O)(OH)₂)-CH₂-P(=O)(OH)₂, the nitrilo group (-N<) falls into the scope of the nitrogen atom-containing group, and the phosphonate group (-P(=O)(OH)₂) falls into the phosphorus atom-containing group.

In the production of the silica monolith adsorbent modified with the nitrogen/phosphorus-containing group, at least in part, the imino group (-NH-) contained in the silica monolith modified with the nitrogen atom-containing group is converted to a nitrogen/phosphorus-containing group represented by the formula: -N(-CH₂-P(=O)(OH)₂)-. In the nitrogen/phosphorus-containing group represented by the formula: -N(-CH2-P(=O)(OH)2)-, the nitrilo group (-N<) falls into the scope of the nitrogen atom-containing group, and the phosphonate group (-P(=O)(OH)₂) falls into the phosphorus atom-containing group.

### [Comparative Example 1]

The same operation as in Example 1 was performed, except that 5.0 g of a commercially available nitrogen atom-containing group-modified silica, Wakogel 50NH2 (manufactured by FUJIFILM Wako Pure Chemical Corporation), was used instead of the silica monolith modified with the nitrogen atom-containing group, obtained in Example 1 (5). The results are shown in Tables 2 and 6. The nitrogen atom-containing group-modified silica, Wakogel 50NH2 (manufactured by FUJIFILM Wako Pure Chemical Corporation), is surface-modified with a nitrogen atom-containing group (a primary amino group (-NH₂)), and it is difficult to evaluate the state before surface modification (the state without surface modification functional groups); therefore, the notation in Table 1 is indicated as "-". Note that Wakogel 50NH2 is a silica gel and does not have a co-continuous structure formed by: a ceramic skeleton including mesopores; and macropores.

### [Comparative Example 2]

The same operation as in Example 1 was performed, except that 5.0 g of a commercially available nitrogen atom-containing group-modified silica, R-Cat-Sil AP (manufactured by KANTO CHEMICAL CO., INC.), was used instead of the silica monolith modified with the nitrogen atom-containing group, obtained in Example 1 (5). The results are shown in Tables 2 and 6. The nitrogen atom-containing group-modified silica, R-Cat-Sil AP (manufactured by KANTO CHEMICAL CO., INC.), is surface-modified with a nitrogen atom-containing group (a primary amino group (-NH₂)), and it is difficult to evaluate the state before surface modification (the state without surface modification functional groups); therefore, the notation in Table 1 is indicated as "-". Note that R-Cat-Sil AP is a silica gel and does not have a co-continuous structure formed by: a ceramic skeleton including mesopores; and macropores.

### [Comparative Example 3]

The same operation as in Example 1 was performed, except that a commercially available ion exchange resin, AMBERLITE IRC747UPS (manufactured by Organo Corporation), was used instead of the silica monolith adsorbent modified with the nitrogen/phosphorus-containing group, obtained in Example 1 (6). The results are shown in Tables 2 and 6. AMBERLITE IRC747UPS is surface-modified with a nitrogen/phosphorus-containing group represented by the formula: -NH-CH₂-P(=O)(ONa)₂, and it is difficult to evaluate the state before surface modification (the state without surface modification functional groups); therefore, the notation in Table 1 is indicated as "-".

### [Comparative Example 4]

The same operation as in Example 1 was performed, except that a commercially available ion exchange resin, UR-3300S (manufactured by UNITIKA LTD.), was used instead of the silica monolith adsorbent modified with the nitrogen/phosphorus-containing group, obtained in Example 1 (6). The results are shown in Tables 2 and 6. UR-3300S is surface-modified with a nitrogen/phosphorus-containing group represented by the formula: -NH-CH₂-P(=O)(OX)₂ (wherein X each independently represents H or Na), and it is difficult to evaluate the state before surface modification (the state without surface modification functional groups); therefore, the notation in Table 1 is indicated as a

### [Comparative Example 5]

The same operation as in Example 1 was performed, except that the silica monolith adsorbent modified with the nitrogen atom-containing group, obtained in Example 1 (5), was used instead of the silica monolith adsorbent modified with the nitrogen/phosphorus-containing group, obtained in Example 1 (6). The results are shown in Tables 1, 2, and 6.

### [Comparative Example 6]

The same operation as in Example 1 was performed, except that, in the production of the silica monolith adsorbent modified with the nitrogen atom-containing group, the silane coupling agent was changed to 4.63 g of 3-(2-aminoethylamino)propyltrimethoxysilane, and the resulting silica monolith adsorbent modified with the nitrogen atom-containing group was used instead of the silica monolith adsorbent modified with the nitrogen/phosphorus-containing group, obtained in Example 1 (6). The results are shown in Tables 1, 2, and 6.

### [Comparative Example 7]

To a reaction container, 5.0 g of the silica monolith obtained in Example 1 (1) was added, followed by the addition of 25 mL of toluene and 5 mL of phosphoric acid, and then heated and refluxed at 110°C for 12 hours. The silica monolith was separated from the solution by filtration, washed with 500 mL of pure water, and dried to obtain 9.10 g of a silica monolith adsorbent modified with a phosphate group. The same operation as in Example 1 was performed, except that the obtained silica monolith adsorbent modified with a phosphate group was used instead of the silica monolith adsorbent modified with the nitrogen/phosphorus-containing group, obtained in Example 1 (6). The results are shown in Tables 1, 2, and 6.

As shown in Table 6, the silica monolith adsorbent modified with the nitrogen/phosphorus-containing group, obtained in the Examples, exhibited a higher adsorption rate for In and a faster adsorption speed than that in the Comparative Examples. This is attributed to the effect of the co-continuous structure formed by: a ceramic skeleton including mesopores; and macropores, and the synergistic effect of the nitrogen atom-containing group and the phosphorus atom-containing group.

### Description of Reference Signs

| | |
|---|---|
| 1 | Ceramic skeleton |
| 2 | Macropore |
| 3 | Mesopore |

## Claims

1. A porous body having a co-continuous structure formed by: a ceramic skeleton comprising mesopores; and macropores,
wherein a surface of the ceramic skeleton is modified with a nitrogen atom-containing group and a phosphorus atom-containing group, and
wherein a total amount of the nitrogen atom-containing group and the phosphorus atom-containing group contained in the porous body is 0.5 mmol/g or more and 6.0 mmol/g or less.

2. The porous body as claimed in claim 1, wherein a first compound containing the nitrogen atom-containing group and the phosphorus atom-containing group is fixed to the surface of the ceramic skeleton, so that the surface of the ceramic skeleton is modified with the nitrogen atom-containing group and the phosphorus atom-containing group.

3. The porous body as claimed in claim 1, wherein a second compound containing the nitrogen atom-containing group and a third compound containing the phosphorus atom-containing group are fixed to the surface of the ceramic skeleton, so that the surface of the ceramic skeleton is modified with the nitrogen atom-containing group and the phosphorus atom-containing group.

4. The porous body as claimed in any one of claims 1 to 3, wherein the nitrogen atom-containing group is selected from a primary amino group, a secondary amino group, a tertiary amino group, a quaternary ammonium group, an imino group, and a nitrilo group.

5. The porous body as claimed in any one of claims 1 to 3, wherein the phosphorus atom-containing group is selected from a phosphinate group, a phosphonate group, a phosphate group, a phosphinous acid group, a phosphonous acid group, a phosphite group, a phosphine group, and a phosphine oxide group.

6. The porous body as claimed in any one of claims 1 to 3, wherein a mole ratio of an amount of the phosphorus atom-containing group contained in the porous body to an amount of the nitrogen atom-containing group contained in the porous body is 0.5 or more and 2.5 or less.

7. The porous body as claimed in any one of claims 1 to 3, wherein the ceramic skeleton contains an element selected from silicon, aluminum, tin, cerium, titanium, and zirconium.

8. An adsorbent for metal and/or metal ion recovery comprising the porous body as claimed in any one of claims 1 to 3.

9. The adsorbent as claimed in claim 8, wherein the metal is selected from: transition metals including rare earth metals; and typical elements of Group 12 to Group 15, and the metal ion is selected from: transition metal ions including rare earth metal ions; and typical element ions of Group 12 to Group 15.

10. A method of removing a metal and/or a metal ion from a solution containing the metal and/or the metal ion, the method comprising a step of contacting the solution with the adsorbent as claimed in claim 8.

11. The method as claimed in claim 10, wherein the metal is selected from: transition metals including rare earth metals; and typical elements of Group 12 to Group 15, and the metal ion is selected from: transition metal ions including rare earth metal ions; and typical element ions of Group 12 to Group 15.
